# EUROPEAN PATENT APPLICATION

(11) **EP 4 847 552 A1**
(43) Date of publication of application: **02.12.2026**
(21) Application number: 25744888.6
(22) Date of filing: 14.01.2025
(51) Int. Cl.: C08G 77/44, C08G 77/18, C09D 183/04

(54) **ORGANOPOLYSILOXANE, ROOM-TEMPERATURE-CURABLE ORGANOPOLYSILOXANE COMPOSITION CONTAINING SAME, COATING AGENT, AND COATED ARTICLE**

(30) Priority: 23.01.2024 JP 2024007723
(71) Applicant: SHIN-ETSU CHEMICAL CO., LTD., Tokyo 100-0005 (JP)
(72) Inventor: ASO, Fumihiro, Annaka-shi, Gunma 379-0224 (JP)
(74) Representative: Mewburn Ellis LLP
(86) International application number: PCT/JP2025/000862
(87) International publication number: WO 2025/158957

(57) **Abstract**

Provided is an organopolysiloxane which is a product of condensation of (a) a silicone oligomer represented by formula (I) with (b) a silicone oil having a silanol group at a molecular chain end and which has a dynamic viscosity at 25°C of 100-2,000 mm²/s.

(SiO_{4/2})ₐ (R¹SiO_{3/2})_{b} (R¹₂SiO_{2/2})_{c} (R¹₃SiO_{1/2})_{d} (R²O_{1/2})ₑ (I)

(In formula (I): R¹ represents a hydrogen atom, an alkyl group, an aryl group, or an aralkyl group; R² represents a hydrogen atom, a methyl group, an ethyl group, an n-propyl group, or an isopropyl group; a, b, c, and d are numbers satisfying 0 ≤ a < 1, 0 < b ≤ 1, 0 ≤ c < 0.5, 0 ≤ d < 0.5, and a + b + c + d = 1; and e is a number satisfying 0 < e ≤ 4.)

## Description

### TECHNICAL FIELD

The present invention relates to an organopolysiloxane, a room-temperature-curable organopolysiloxane composition containing the same, a coating agent and a coated article.

### BACKGROUND ART

Organopolysiloxanes containing alkoxysilyl groups are widely used in paints and coating agents. In general, organopolysiloxanes having alkoxy groups at terminals form strong siloxane networks as the terminal alkoxy groups react with one another when the organopolysiloxanes are blended with curing catalysts and exposed to external energy such as thermal energy. Resulting films have excellent heat resistance and weather resistance, and thus have found a wide range of applications from outdoor structures to automobile parts and electronic components.

Alkoxysilyl-group-containing organopolysiloxanes are usually produced by hydrolytic condensation of alkoxysilanes (Patent Documents 1 and 2).

However, in general, most of high-activity alkoxy groups are consumed by the hydrolytic condensation reaction during the production. Only a small number of low-activity alkoxy groups remain in the generated organopolysiloxane, and thus a film prepared therefrom often has poor curability. The tendency of the curability to decrease becomes more prominent as the molecular weight of the generated organopolysiloxane increases, and additional steps such as heating at a high temperature during the film formation are required to compensate for the low curability.

On the other hand, low-molecular-weight organopolysiloxanes having a molecular weight of 5,000 or less have excellent reactivity since a large number of active alkoxy groups remain therein, and thus some compositions containing low-molecular-weight organopolysiloxanes cure without undergoing a heating step. However, cured films of low-molecular-weight organopolysiloxanes are thin and thus have low mechanical properties. Moreover, the alkoxy groups remaining in the films react sequentially when exposed to heat from outside, and thus issues such as formation of cracks over time arise.

As mentioned above, the issues with various organopolysiloxanes are, for example, degradation of curability caused by scarcity of polymerizable functional groups for those with high molecular weights, and low mechanical strength and formation of cracks over time under heating for those with low molecular weights.

Moreover, various physical properties such as film curing temperature, heat resistance, light resistance, solvent resistance, surface hardness and workability vary due to variation in molecular weight of the organopolysiloxane. Thus, a molecular weight that suits the usage is required.

For these reasons, molecular weight control is a critical factor in the production of organopolysiloxanes. In Patent Document 3, it has been found that an organopolysiloxane having specified peak top and peak area in a specified molecular weight region can solve the issues described above. Specifically, the issues described above have been resolved by the combined use of an organopolysiloxane having a high molecular weight and an organopolysiloxane having a low molecular weight. However, according to this method, a solvent is necessary to dissolve the organopolysiloxane having a high molecular weight, which is not preferable from an environmental perspective.

Patent Document 4 proposes a liquid organopolysiloxane having a high molecular weight and high reactivity which is obtained by reacting a polydimethylsiloxane unit having an alkoxysilyl group and a preliminarily condensed silicone oligomer. This organopolysiloxane can achieve both solvent-free liquid properties and room-temperature curability. However, while the organopolysiloxane has high reactivity, cracks sometimes form in cured films under a high-temperature environment.

### PRIOR ART DOCUMENTS

### PATENT DOCUMENTS

Patent Document 1: JP 6525573
Patent Document 2: JP 4110402
Patent Document 3: JP-A 2021-172707
Patent Document 4: WO 2023/157603

### SUMMARY OF INVENTION

### TECHNICAL PROBLEM

The present invention has been made in view of the above circumstances, and an object of the present invention is to provide an organopolysiloxane having a low viscosity even in the absence of a solvent and excellent curability, which enables the preparation of a room-temperature-curable composition capable of forming a cured product with good heat resistance, and to provide a room-temperature-curable organopolysiloxane composition containing such organopolysiloxane.

### SOLUTION TO PROBLEM

The inventors of the present invention have conducted extensive investigations to achieve the object described above and thus have found that an organopolysiloxane which is a condensation product obtained by condensation reacting of a silicone oligomer having an alkoxysilyl group and a silicone oil having a silanol group at a molecular chain terminal is liquid even without the use of solvent and has good curability. The inventors have also found that a cured film of a composition containing this organopolysiloxane has good crack resistance. These findings have ultimately led to the present invention.

Accordingly, the present invention provides the following:
1. An organopolysiloxane which is a condensation product between (a) a silicone oligomer represented by formula (I) below and (b) a silicone oil having a silanol group at a molecular chain terminal, in which the organopolysiloxane has a kinematic viscosity at 25°C of 100 to 2,000 mm²/s

   [Chem. 1] (SiO_{4/2})ₐ (R¹SiO_{3/2})_{b} (R¹₂SiO_{2/2})_{c} (R¹₃SiO_{1/2})_{d} (R²O_{1/2})ₑ (I)

   (in the formula, each R¹ is independently a hydrogen atom or a C₁-C₈ alkyl, C₆-C₁₈ aryl or C₇-C₂₀ aralkyl group, each of which may be substituted with a halogen atom, R² is a hydrogen atom, methyl group, ethyl group, n-propyl group or isopropyl group, a, b, c and d are numbers which satisfy 0 ≤ a < 1, 0 < b ≤ 1, 0 ≤ c < 0.5, 0 ≤ d < 0.5 and a + b + c + d = 1, and e is a number which satisfies 0 < e ≤ 4);
2. The organopolysiloxane described in item 1, in which, in formula (1), a and d are 0;
3. The organopolysiloxane described in item 1 or 2, in which the component (a) has a polystyrene-equivalent weight-average molecular weight of 500 to 3,000 as determined by gel permeation chromatography;
4. The organopolysiloxane described in any one of items 1 to 3, in which the component (b) has a polystyrene-equivalent weight-average molecular weight of 200 to 2,000 as determined by gel permeation chromatography;
5. The organopolysiloxane described in any one of items 1 to 4, in which 10 to 80 parts by weight of the component (b) is used per 100 parts by weight of the component (a);
6. The organopolysiloxane described in any one of items 1 to 5, in which the organopolysiloxane has a polystyrene-equivalent weight-average molecular weight of 5,000 to 100,000 as determined by gel permeation chromatography;
7. A room-temperature-curable organopolysiloxane composition including the organopolysiloxane described in any one of items 1 to 6 and a curing catalyst;
8. A coating agent including the room-temperature-curable organopolysiloxane composition described in item 7;
9. A cured product of the room-temperature-curable organopolysiloxane composition described in item 7; and
10. A coated article including a substrate and the cured product described in item 9 formed on at least one side of the substrate, either directly or over one or more other layers.

### ADVANTAGEOUS EFFECTS OF INVENTION

An organopolysiloxane of the present invention has a low viscosity even in the absence of a solvent and provides a room-temperature-curable organopolysiloxane composition which has excellent curability. Thus, the solvent removal step is not needed during formation of a cured film, and thus deterioration of the working environment due to volatilization of the solvent, as well as corrosion or degradation of electrical and electronic components and circuit boards on which such components are mounted, can be avoided.

Furthermore, a cured product obtained from the room-temperature-curable composition containing the organopolysiloxane of the present invention has good heat resistance and thus is suitable for producing various coated articles.

### DESCRIPTION OF EMBODIMENTS

The present invention is specifically described below.

### [1] Organopolysiloxane

An organopolysiloxane of the present invention is a condensation reaction product between (a) a silicone oligomer and (b) a silicone oil having a silanol group at a molecular chain terminal.

### (a) Silicone oligomer

A silicone oligomer of the component (a) has an average siloxane unit compositional ratio represented by formula (I) below.

[Chem. 2] (SiO_{4/2})ₐ (R¹SiO_{3/2})_{b} (R¹₂SiO_{2/2})_{c} (R¹₃SiO_{1/2})_{d} (R²O_{1/2})ₑ (I)

In formula (I), each R¹ is independently a hydrogen atom or a C₁-C₈ alkyl, C₆-C₁₈ aryl or C₇-C₂₀ aralkyl group, each of which may be substituted with a halogen atom.

The C₁-C₈ alkyl group of R¹ may be linear, branched or cyclic. Specific examples include methyl, ethyl, n-propyl, isopropyl, n-butyl, isobutyl, tert-butyl, neopentyl, n-hexyl, cyclohexyl, n-heptyl and n-octyl groups. Among these, a C₁-C₆ alkyl group is preferred, a C₁-C₃ alkyl group is more preferred, and a methyl group or an ethyl group is yet more preferred.

The C₆-C₁₈ aryl group is preferably a C₆-C₁₀ aryl group. Specific examples include unsubstituted aryl groups such as phenyl and naphthyl groups; and alkylaryl groups such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl groups. Among these, phenyl group is preferred.

The C₇-C₂₀ aralkyl group is preferably a C₇-C₁₀ aralkyl group. Specific examples include benzyl and phenylethyl groups.

Some or all hydrogen atoms on the alkyl group, aryl group and aralkyl group may be substituted with halogen atoms (fluorine, chlorine, bromine and iodine atoms). Specific examples include chloromethyl, chloropropyl, bromoethyl, trifluoropropyl, chlorophenyl and bromophenyl groups.

Among these, a methyl group, an ethyl group or a phenyl group is preferable as R¹.

R² is a hydrogen atom, a methyl group, an ethyl group, an n-propyl group or an isopropyl group. In particular, R² is preferably a hydrogen atom, a methyl group or an ethyl group. At least half of the groups represented by R² are preferably methyl groups, ethyl groups, n-propyl groups or isopropyl groups. Methyl groups or ethyl groups are more preferred.

The subscripts a, b, c and d are numbers which satisfy 0 ≤ a < 1, 0 < b ≤ 1, 0 ≤ c < 0.5, 0 ≤ d < 0.5, and a + b + c + d = 1.

The subscript a is a number which satisfies 0 ≤ a < 1. From the standpoint of the crack suppressing effect, a number which satisfies 0 ≤ a ≤ 0.3 is preferred. 0 is more preferred.

The subscript b is a number which satisfies 0 < b ≤ 1. From the standpoint of the scuff resistance of the resulting cured product, a number which satisfies 0.2 ≤ b ≤ 1 is preferred.

The subscript c is a number which satisfies 0 ≤ c < 0.5. From the standpoint of the curability of the composition and the hardness of the resulting cured product, a number which satisfies 0 ≤ c ≤ 0.4 is preferred.

The subscript d is a number which satisfies 0 ≤ d < 0.5. From the standpoint of the curability of the composition and the hardness of the resulting cured product, a number which satisfies 0 ≤ d ≤ 0.2 is preferred. 0 is more preferred.

The subscript e is a number which satisfies 0 < e ≤ 4. For effectively suppressing condensation reactions by the condensable functional groups and in view of the crack resistance, water resistance and weather resistance of the resulting cured product, e is preferably a number which satisfies 0 < e ≤ 3.

The silicone oligomer is preferably a silicone oligomer represented by formula (I) above in which R¹ and R² are methyl groups or ethyl groups, a to d are numbers which satisfy a = 0, 0 < b ≤ 1, 0 ≤ c < 0.5, d = 0 and a + b + c + d = 1 and e is preferably a number which satisfies 0 < e ≤ 3.

The polystyrene-equivalent weight-average molecular weight (Mw) of the component (a) as determined by gel permeation chromatography (GPC) is preferably 500 to 3,000, and more preferably 1,000 to 2,000. As long as Mw is 500 or more, the molecular weight sufficiently increases by condensation, and heat resistance is improved. As long as Mw is 3,000 or less, gelation caused by the increase in molecular weight is suppressed, and generation of surface irregularities and coating unevenness during coating, etc., can be prevented.

As the GPC measurement conditions, for example, the method used in Examples described below may be employed.

One component (a) may be used alone or two or more components (a) may be used in combination.

The method for preparing the component (a) is not particularly limited and a known preparation method can be employed. For example, the component (a) can be obtained by hydrolytic condensation of a silane compound having a hydrolyzable group.

### (b) Silicone oil having silanol group at molecular chain terminal

The component (b) is a silicone oil having one or more silanol groups at a molecular chain terminal. When the component (b) does not have a silanol group, the reaction does not sufficiently proceed during the condensation reaction, and the oil remains in the obtained organopolysiloxane, causing curing failure.

Examples of the groups other than the silanol group, bonded to silicon atoms are those groups which are listed as the examples of R¹ in the component (a). A methyl group or a phenyl group is preferred.

The molecular structure of the component (b) is, for example, linear, branched, or cyclic. A preferable structure of the silicone oil of the component (b) is a linear diorganopolysiloxane in which one terminal or preferably both terminals are capped with silanol group-containing siloxane units such as hydroxydimethylsiloxane units and in which the main chain is basically formed by repetition of diorganosiloxane units.

Specific examples of such component (b) include a dimethylpolysiloxane having both terminals capped with hydroxydimethylsiloxy groups, a dimethylsiloxane·methylhydrogensiloxane copolymer having both terminals capped with hydroxydimethylsiloxy groups, a dimethylsiloxane·methylphenylsiloxane copolymer having both terminals capped with hydroxydimethylsiloxy groups and a dimethylsiloxane·diphenylsiloxane copolymer having both terminals capped with hydroxydimethylsiloxy groups.

The polystyrene-equivalent weight-average molecular weight (Mw) of the component (b) as determined by gel permeation chromatography is preferably 200 to 2,000, more preferably 300 to 1,500 and yet more preferably 400 to 1,000. As long as Mw is 200 or more, the crack resistance of the obtained organopolysiloxane is improved, and as long as Mw is 2,000 or less, occurrence of curing failure caused by the obtained organopolysiloxane being oily can be suppressed.

One component (b) may be used alone or two or more components (b) may be used in combination.

The amount of the component (b) used in the condensation reaction is preferably 10 to 80 parts by weight and more preferably 10 to 70 parts by weight per 100 parts by weight of the component (a). At 10 parts by weight or more, the molecular weight of the organopolysiloxane sufficiently increases by condensation and the heat resistance of the obtained cured product is improved. At 80 parts by weight or less, gelation caused by the increase in molecular weight is suppressed, and generation of surface irregularities and coating unevenness during coating, etc., can be prevented.

### [2] Method of producing organopolysiloxane

The method of producing the organopolysiloxane of the present invention is not particularly limited. For example, the organopolysiloxane is obtained by condensing the component (a) and the component (b) in the presence of a catalyst under a heating condition of 60 to 200°C and distilling away the by-product alcohols as necessary.

A known catalyst may be used as the catalyst. The catalyst preferably exhibits an acidity of pH 2 to 7 when prepared into an aqueous solution. Particularly preferable examples include acidic hydrogen halides, sulfonic acids, carboxylic acids, acidic or weakly acidic inorganic salts and solid acids such as ion exchange resins. Specific examples of acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, phosphoric acid and cation exchange resins having sulfonic acid or carboxylic acid groups on the surface.

The amount of the catalyst used is not particularly limited. However, in order to accelerate the reaction and in view of the ease of removing the catalyst after the reaction, the amount of the catalyst is preferably 0.02 to 10 parts by weight per 100 parts by weight of the component (a).

The condensation reaction conditions are also not particularly limited. For example, the temperature of the condensation reaction is preferably 60 to 200°C. In order to improve the rate of conversion and in view of preventing decomposition of organic groups, the temperature is more preferably 60 to 150°C. The condensation reaction time is preferably 1 to 10 hours and more preferably 1 to 8 hours.

In the condensation reaction, a solvent may be used as long as the reaction is not inhibited. When a solvent is used, it is preferable to completely remove the solvent by treatment such as a stripping operation. Specific examples of organic solvents that may be used include methanol, ethanol, propanol, acetone, methyl ethyl ketone, methyl isobutyl ketone, tetrahydrofuran, toluene and xylene.

The kinematic viscosity of the organopolysiloxane of the present invention at 25°C is 100 to 2,000 mm²/s, preferably 120 to 1,500 mm²/s and more preferably 140 to 500 mm²/s. At a kinematic viscosity of less than 100 mm²/s, the heat resistance of the obtained cured product is deficient, and at a kinematic viscosity exceeding 2,000 mm²/s, surface irregularities, uneven coating and the like occur during coating.

The kinematic viscosity is a value measured with a Cannon-Fenske viscometer by a method set forth in JIS Z 8803: 2011 at 25°C (the same applies hereinafter).

The polystyrene-equivalent weight-average molecular weight (Mw) of the organopolysiloxane of the present invention as determined by gel permeation chromatography (GPC) is preferably 5,000 to 100,000 and more preferably 5,000 to 50,000.

### [3] Room-temperature-curable organopolysiloxane composition

The room-temperature-curable organopolysiloxane composition of the present invention contains the following components.
(A) An organopolysiloxane which is a condensation reaction product between (a) a silicone oligomer represented by formula (I) above and (b) a silicone oil having a silanol group at a molecular chain terminal and which has a kinematic viscosity at 25°C of 100 to 2,000 mm²/s.
(B) Curing Catalyst

As used herein, the term "room temperature" means a normal temperature without particular heating or cooling, and generally means a temperature range of 0 to 40°C, preferably 5 to 35°C.

The curing catalyst of the component (B) is not particularly limited as long as the curing catalyst is commonly used in organosiloxane-based coating materials, but is preferably an organic metal compound. Examples include alkoxide compounds, chelate compounds, and ester compounds of metals such as Ti, Al, Zr and Sn. A curing catalyst containing an organic titanium compound is preferred.

Specific examples of the metal alkoxide compounds include aluminum alkoxides such as aluminum trimethoxide, aluminum triethoxide, aluminum tri-n-propoxide, aluminum triisopropoxide, aluminum tri-n-butoxide, aluminum triisobutoxide, aluminum tri-s-butoxide and aluminum tri-t-butoxide; titanium alkoxides such as tetramethyl titanate, tetraethyl titanate, tetra-n-propyl titanate, tetraisopropyl titanate, tetra-n-butyl titanate, tetraisobutyl titanate, tetra-t-butyl titanate, tetra-n-hexyl titanate, tetraisooctyl titanate and tetra-n-lauryl titanate; zirconium alkoxides such as tetraethyl zirconate, tetra-n-propyl zirconate, tetraisopropyl zirconate, tetra-n-butyl zirconate, tetra-s-butyl zirconate, tetra-t-butyl zirconate, tetra-n-pentyl zirconate, tetra-t-pentyl zirconate, tetra-t-hexyl zirconate, tetra-n-heptyl zirconate, tetra-n-octyl zirconate and tetra-n-stearyl zirconate; and tin alkoxides such as dibutyltin dibutoxide.

Specific examples of the metal chelate compounds include aluminum chelate compounds such as tris(ethyl acetoacetate)aluminum, tris(n-propyl acetate)aluminum, tris(isopropyl acetate)aluminum , tris(n-butyl acetate)aluminum , isopropoxybis(ethyl acetate)aluminum, tris(acetylacetonato)aluminum, tris(propionylacetonato)aluminum, diisopropoxypropionylacetonatoaluminum, acetylacetonato·bis(propionylacetonato)aluminum, monoethyl acetate·bis(acetylacetonato)aluminum, acetylacetonatoaluminum·di-s-butyrate, methylacetoacetatealuminum·di-s-butyrate, di(methyl acetoacetate)aluminum·mono-tert-butyrate, diisopropoxyethylacetatealuminum and monoacetylacetonato·aluminum bis(ethyl acetoacetate); titanium chelate compounds such as diisopropoxy·bis(ethyl acetoacetate)titanate, diisopropoxy·bis(acetylacetonato)titanate and di-n-butoxy·bis(acetylacetonato)titanate; zirconium chelate compounds such as tetrakis(acetylacetonato)zirconium, tetrakis(n-propyl acetoacetate) zirconium, and tetrakis(ethyl acetoacetate) zirconium; and tin chelate compounds e.g. tin ester compounds such as dibutyltin diacetate, dibutyltin di(2-ethylhexylate), dibenzyltin di(2-ethylhexylate), dibutyltin dilaurate, dibutyltin diisooctylmaleate and dibutyltin bis(acetylacetonate). From the standpoints of the reaction activity and the stability of the composition, titanium chelate compounds are preferably used.

Commercially available products can be used as the titanium chelate compounds. Examples include D-20, D-25 and D-26 (all produced by Shin-Etsu Chemical Co., Ltd.) and ORGATIX TC-750 and ORGATIX TC-401 (produced by Matsumoto Fine Chemical Co., Ltd.).

The amount of the catalyst component blended per 100 parts by weight of the organopolysiloxane is preferably 0.1 to 15 parts by weight and more preferably 0.5 to 5 parts by weight from the viewpoints of the curability and stability of the composition and the hardness of the cured product.

The curing catalyst component may be a single composition or a mixture of multiple compounds having different compositions.

The room-temperature-curable organopolysiloxane composition of the present invention may contain, as appropriate, optional additives so long as the effects of the present invention are not adversely affected.

Specific examples of the additives include non-reactive silicone oils, reactive silicone oils, silane coupling agents, adhesion promoters, non-reactive polymer resins, fillers, leveling agents, rheology modifiers, reactive diluents, non-reactive diluents, surfactants, dispersants, defoamers, dehydrators, anti-aging agents, antioxidants, antistatic agents, infrared absorbers, ultraviolet absorbers, light stabilizers, fluorescent agents, dyes, pigments, fragrances, abrasives, rust inhibitors and thixotropic agents.

These may each be used alone, or two or more of these may be used in combination.

The room-temperature-curable organopolysiloxane composition of the present invention is preferably in a solvent-free form substantially free of any solvent, but, in view of the usage and workability, can be combined with a solvent and used. As used herein, the term "substantially" means that the solvent content in the composition is 1 mass% or less, particularly 0.1 mass% or less. Within such a range, the solvent removal step is not needed for forming a cured film. Thus, work environment degradation and corrosion/deterioration of electrical/electronic components and circuit boards carrying such components caused by solvent evaporation do not occur.

Specific examples of the solvents that can be used include those reaction solvents which are used in producing the organopolysiloxane. It should be noted that the solvent also includes substances that are not intentionally added to the composition, such as a reaction solvent that could not be completely removed by distillation under reduced pressure.

The method of producing the composition of the present invention is not particularly limited. The composition can be obtained by mixing the components (A) and (B) and, if needed, any optional additives and solvents in any desired order.

The room-temperature-curable organopolysiloxane composition of the present invention can be used as a so-called one-package-type room-temperature-curable composition which is stored in a sealed container as is and cures only when exposed to moisture in the air at the time of use.

The room-temperature-curable organopolysiloxane composition of the present invention can also be used as a multi-package-type room-temperature-curable composition in which the organopolysiloxane and the curing catalyst are separately stored in separate containers and are mixed at the time of use.

### [4] Coating agent and coated article

The room-temperature-curable organopolysiloxane composition of the present invention may be suitably used as a coating agent and is especially well-suited for use as an exterior wall coating material. However, the applicable uses for the composition are not limited to the coating agent. When the composition of the present invention is to be used as a coating agent, for example, a film is formed by applying the composition to at least one side of a substrate, either directly or over one or more other layers, and then curing the applied composition. As a result, a coated article having a cured film of the coating agent laminated on at least one side of the substrate, either directly or over one or more other layers, can be obtained.

Examples of the substrate include, but are not particularly limited to, glass, silicon wafers, metals, plastic molded bodies, ceramics and composites of these.

Substrates obtained by subjecting the surfaces of the aforementioned substrates to chemical conversion treatment, corona discharge treatment or acid or alkali solution treatment can also be used, and so can decorative plywood in which the substrate main body and the surface layer are coated with different types of coating materials.

Examples of the other layer or layers are layers obtained by polyester resin coating, polyurethane resin coating, amino alkyd resin coating, lacquer coating, spray coating and aqueous wax coating.

A known technique may be suitably selected as the method for applying the coating agent to a substrate. Various types of coating methods may be used, including, for example, roll coating, bar coating, wire bar coating, spray coating, flow coating, spin coating, curtain coating, knife coating, dip coating and brush coating. The coating amount is not particularly limited, but is preferably such an amount that the thickness of the film after drying is 0.1 to 1,000 µm and more preferably 1 to 100 µm.

Examples of the method for curing the composition of the present invention include room-temperature curing and heat curing. The composition of the present invention can be cured, for example, by leaving the composition to stand still at room temperature for 24 hours or longer. When curing is to be performed under heating, the heating temperature, although not particularly limited, is preferably 100 to 300°C and more preferably 150 to 250°C. Room temperature curing and heat curing may be adopted in combination.

### EXAMPLES

Examples and Comparative Examples are given below to more concretely describe the present invention, although the present invention is not limited by these Examples.

In Examples described below, the kinematic viscosity was measured with a Cannon-Fenske viscometer by a method set forth in JIS Z 8803: 2011 at 25°C.

The compositional unit ratio of the organopolysiloxane was calculated from the integral values of detected spectra in ¹H-NMR and ²⁹Si-NMR by using an NMR instrument produced by JEOL Ltd.

The molecular weight was obtained as a polystyrene-equivalent weight-average molecular weight by GPC measurement under the following conditions.

### [GPC Conditions]

| | |
|---|---|
| Instrument: | HLC-8220 (produced by Tosoh Corporation) |
| Columns: | TSKgel GMHXL-L, TSKgel G4000HXL, TSKgel G2000HXL ×2 |
| Developing solvent: | tetrahydrofuran (THF) |
| Flow rate: | 1 mL/minute |
| Detector: | RI |
| Column thermostat temperature: | 40°C |
| Standard substance: | polystyrene |

### [1] Method of producing organopolysiloxane

The following components were used as starting materials for producing organopolysiloxanes of Examples 1-1 to 1-5 and Comparative Examples 1-1 to 1-9.

### Component (a)

| | |
|---|---|
| a-1: | Mw: 1,000, kinematic viscosity: 25 mm²/s, in formula (I): a = 0, b = 1.0, c = 0, d = 0, e = 1.1, R¹ and R² = methyl groups |
| a-2: | Mw: 1,800, kinematic viscosity: 100 mm²/s, in formula (I): a = 0, b = 0.66, c = 0.34, d = 0, e = 0.8, R¹ and R² = methyl groups |
| a-3: | Mw: 10,000, kinematic viscosity: 80 mm²/s, in formula (I): a = 0, b = 0.50, c = 0.50, d = 0, e = 0.4, R¹ and R² = methyl groups |
| a-4: | Mw: 200, kinematic viscosity: 5 mm²/s, in formula (I): a = 0, b = 1.0, c = 0, d = 0, e = 1.9, R¹ and R² = methyl groups |

### Component (b)

| | |
|---|---|
| b-1: | Dimethylpolysiloxane having silanol groups at both molecular chain terminals (dimethylpolysiloxane having both terminals capped with hydroxydimethylsiloxy groups, Mw: 400, average number of Si atoms: 5) |
| b-2: | Dimethylpolysiloxane having silanol groups at both molecular chain terminals (dimethylpolysiloxane having both terminals capped with hydroxydimethylsiloxy groups, Mw: 1,000, average number of Si atoms: 13) |
| b-3: | Dimethylpolysiloxane having silanol groups at both molecular chain terminals (dimethylpolysiloxane having both terminals capped with hydroxydimethylsiloxy groups, Mw: 3,200, average number of Si atoms: 40) |
| b'-4: | Dimethylpolysiloxane having both terminals capped with trimethoxysiloxy groups (Mw: 1,800, average number of Si atoms: 22) |

### [Example 1-1]

Into a 500 mL separable flask equipped with a stirrer, a reflux condenser, a dropping funnel and a thermometer, 100 parts by weight of a silicone oligomer a-1, 40 parts by weight of a silicone oil b-1 and 2 parts by weight of a strongly acidic cation exchange resin (LEWATIT K 2629 produced by Lanxess) were placed, and the resulting mixture was reacted at 100°C for 3 hours under stirring. Then the reaction liquid was distilled away at normal pressure and, after the fraction was no longer detected, the stirring was conducted at 105°C for 3 hours. Lastly, the fraction was removed by distillation at reduced pressure (90°C, 1.3 kPa), and filtration was carried out to obtain an organopolysiloxane (yield: 120 parts by weight). The physical properties of the obtained organopolysiloxane are indicated in Table 1.

### [Examples 1-2 to 1-5 and Comparative Examples 1-1 to 1-9]

Organopolysiloxanes were prepared by the same procedure as in Example 1-1 with changes in the components and the blend amounts indicated in Table 1. The physical properties of the obtained organopolysiloxanes are also indicated in Table 1.

**[Table 1]**

| | (a) / pbw | (b) / pbw | Kinematic viscosity (mm²/s) | Molecular weight |
|---|---|---|---|---|
| Example 1-1 | a-1 / 100 | b-1 / 40 | 150 | 40,000 |
| Example 1-2 | a-2 / 100 | b-1 / 40 | 500 | 13,000 |
| Example 1-3 | a-1 / 100 | b-2 / 40 | 270 | 43,000 |
| Example 1-4 | a-1 / 100 | b-1 / 10 | 240 | 5,000 |
| Example 1-5 | a-1 / 100 | b-2 / 70 | 140 | 47,000 |
| Comparative Example 1-1 | a-3 / 100 | b-1 / 40 | - * | - * |
| Comparative Example 1-2 | a-3 / 100 | - / 0 | 80 | 10,000 |
| Comparative Example 1-3 | a-4 / 100 | b-1 / 40 | 80 | 4,000 |
| Comparative Example 1-4 | a-1 / 100 | - / 0 | 10 | 1,500 |
| Comparative Example 1-5 | a-1 / 100 | b-1 / 4 | 50 | 3,000 |
| Comparative Example 1-6 | a-1 / 100 | b-1 / 80 | 5,600 | 200,000 |
| Comparative Example 1-7 | a-1 / 100 | b-1 / 100 | 7,300 | 340,000 |
| Comparative Example 1-8 | a-1 / 100 | b-3 / 40 | 50 | 10,000 |
| Comparative Example 1-9 | a-1 / 100 | b'-4 / 40 | 30 | 2,000 |

| | | | | |
|---|---|---|---|---|
| * Undetectable due to the increase in molecular weight. | | | | |

### [2] Preparation of room-temperature-curable organopolysiloxane composition and evaluation of films

### [Examples 2-1 to 2-5, Comparative Examples 2-1 to 2-9]

To 100 parts by weight of each of the organopolysiloxanes obtained in Examples 1-1 to 1-5 and Comparative Examples 1-1 to 1-9, 2 parts by weight of ORGATIX TC-750 (titanium catalyst produced by Matsumoto Fine Chemical Co. Ltd.) was added to prepare room-temperature-curable organopolysiloxane compositions.

Film outer appearance, the tack-free time and the heat resistance of the obtained room-temperature-curable organopolysiloxane compositions were evaluated by the methods described below. The results are shown in Table 2.

### (1) Film outer appearance

Each of the obtained compositions was applied to a polished steel sheet from which the surface oil had been wiped off to form a 10 µm-thick layer with a bar coater and was left standing at 23°C and 50% RH for 7 days to obtain cured films. Cured films which had a film surface that was even and free of surface irregularities caused by gel aggregates or corrugations caused by curing shrinkage and which did not undergo clouding under visual examination were evaluated as "○". Cured films which had a film surface that was uneven, had undergone blushing and had surface irregularities caused by gel aggregates or corrugations caused by curing shrinkage were evaluated as "×".

### (2) Tack-free (TF) test

The tack-free time was measured in accordance with JIS K 6249 under the conditions of 23°C and 50% RH. Each of the obtained compositions was applied to a polished steel sheet from which surface oil had been wiped off to form a 10 µm-thick coating, and then the surface was lightly touched with a finger washed with ethyl alcohol. The compositions which took 1 hour or less before the coating stopped sticking to the finger were evaluated as "○", and those compositions which took more than 1 hour were evaluated as "×".

### (3) Heat resistance

The cured films obtained by the film outer appearance evaluation described above were further heated for 30 minutes with a 200°C dryer. Films that did not have surface irregularities or cracks caused by curing shrinkage after cooling were evaluated as "○". Films that had surface irregularities and/or cracks caused by curing shrinkage were evaluated as "×".

**[Table 2]**

| Composition | Organopolysiloxane | Film outer appearance | TF test | Heat resistance |
|---|---|---|---|---|
| Example 2-1 | Example 1-1 | ○ | ○ | ○ |
| Example 2-2 | Example 1-2 | ○ | ○ | ○ |
| Example 2-3 | Example 1-3 | ○ | ○ | ○ |
| Example 2-4 | Example 1-4 | ○ | ○ | ○ |
| Example 2-5 | Example 1-5 | ○ | ○ | ○ |
| Comparative Example 2-1 | Comparative Example 1-1 | × | Undetectable | Undetectable |
| Comparative Example 2-2 | Comparative Example 1-2 | ○ | × | ○ |
| Comparative Example 2-3 | Comparative Example 1-3 | ○ | ○ | × |
| Comparative Example 2-4 | Comparative Example 1-4 | ○ | ○ | × |
| Comparative Example 2-5 | Comparative Example 1-5 | ○ | ○ | × |
| Comparative Example 2-6 | Comparative Example 1-6 | × | Undetectable | Undetectable |
| Comparative Example 2-7 | Comparative Example 1-7 | × | Undetectable | Undetectable |
| Comparative Example 2-8 | Comparative Example 1-8 | ○ | × | ○ |
| Comparative Example 2-9 | Comparative Example 1-9 | × | ○ | × |

As indicated in Table 2, the curable compositions obtained in Examples 2-1 to 2-5 have short tack-free times, excellent curability and high heat resistance.

On the other hand, in Comparative Example 2-1 in which the component (a) was changed to the silicone oligomer a-3 having a high molecular weight, the entire composition had gelled due to the increase in molecular weight of the obtained organopolysiloxane, and it was difficult to form a cured film. The composition of Comparative Example 2-2 that contained only the silicone oligomer a-3 and a curing catalyst had a long tack-free time and poor curability.

In addition, in Comparative Example 2-3 in which the component (a) was changed to the silicone oligomer a-4 having a low molecular weight, the molecular weight of the obtained organopolysiloxane was low. The kinematic viscosity was below the lower limit and the cured film had insufficient heat resistance.

Cured films of Comparative Example 2-4 in which no component (b) was used and Comparative Example 2-5 in which the amount of the component (b) added was small and the kinematic viscosity was below the lower limit due to the decrease in molecular weight of the obtained organopolysiloxane had poor heat resistance. Cured films of Comparative Example 2-6 and Comparative Example 2-7 in which the amount of the component (b) added was large and the kinematic viscosity was beyond the upper limit due to the increase in molecular weight of the obtained organopolysiloxane had gel aggregates occurring in the film surface.

In Comparative Example 2-8 in which the component (b) was changed to the silicone oil b-3 having a high molecular weight, the obtained organopolysiloxane exhibited properties similar to those of oils. The composition had a low kinematic viscosity and insufficient curability.

Furthermore, in Comparative Example 2-9 in which the silicone oil b'-4 not having silanol groups at the molecular chain terminals was used, blushing occurred in appearance due to the remaining unreacted oil on the film. The heat resistance was also low.

## Claims

1. An organopolysiloxane which is a condensation product between (a) a silicone oligomer represented by formula (I) below and (b) a silicone oil having a silanol group at a molecular chain terminal, wherein the organopolysiloxane has a kinematic viscosity at 25°C of 100 to 2,000 mm²/s
[Chem. 1] (SiO_{4/2})ₐ (R¹SiO_{3/2})_{b} (R¹₂SiO_{2/2})_{c} (R¹₃SiO_{1/2})_{d} (R²O_{1/2})ₑ (1)
wherein, each R¹ is independently a hydrogen atom or a C₁-C₈ alkyl, C₆-C₁₈ aryl or C₇-C₂₀ aralkyl group, each of which may be substituted with a halogen atom, R² is a hydrogen atom, methyl group, ethyl group, n-propyl group or isopropyl group, a, b, c and d are numbers which satisfy 0 ≤ a < 1, 0 < b ≤ 1, 0 ≤ c < 0.5, 0 ≤ d < 0.5 and a + b + c + d = 1, and e is a number which satisfies 0 < e ≤ 4.

2. The organopolysiloxane of claim 1, wherein, in formula (I), a and d are 0.

3. The organopolysiloxane of claim 1 or 2, wherein the component (a) has a polystyrene-equivalent weight-average molecular weight of 500 to 3,000 as determined by gel permeation chromatography.

4. The organopolysiloxane of any one of claims 1 to 3, wherein the component (b) has a polystyrene-equivalent weight-average molecular weight of 200 to 2,000 as determined by gel permeation chromatography.

5. The organopolysiloxane of any one of claims 1 to 4, wherein 10 to 80 parts by weight of the component (b) is used per 100 parts by weight of the component (a).

6. The organopolysiloxane of any one of claims 1 to 5, wherein the organopolysiloxane has a polystyrene-equivalent weight-average molecular weight of 5,000 to 100,000 as determined by gel permeation chromatography.

7. A room-temperature-curable organopolysiloxane composition comprising the organopolysiloxane of any one of claims 1 to 6 and a curing catalyst.

8. A coating agent comprising the room-temperature-curable organopolysiloxane composition of claim 7.

9. A cured product of the room-temperature-curable organopolysiloxane composition of claim 7.

10. A coated article comprising a substrate and the cured product of claim 9 formed on at least one side of the substrate, either directly or over one or more other layers.
